(19) Europäisches Patentamt
European Patent Office
Office européen des brevets

(11) **EP 4 102 707 A1**

(12) **EUROPÄISCHE PATENTANMELDUNG**

(43) Veröffentlichungstag:
**14.12.2022 Patentblatt 2022/50**

(21) Anmeldenummer: **21179053.0**

(22) Anmeldetag: **11.06.2021**

(51) Internationale Patentklassifikation (IPC):
**H02M 1/36** (2007.01)    **H02M 5/45** (2006.01)
**H02M 1/00** (2006.01)

(52) Gemeinsame Patentklassifikation (CPC):
**H02M 1/36; H02M 1/0096; H02M 5/45**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder: **Weis, Benno**
**91334 Hemhofen (DE)**

(54) **LADESTROMVERFAHREN, LADESTROMVORRICHTUNG UND ELEKTRISCHER UMRICHTER MIT DER LADESTROMVORRICHTUNG**

(57) Die Erfindung betrifft ein Ladestromverfahren (1) zur Begrenzung eines Ladestroms ($I_L$) in einem Gleichspannungskreis (2), wobei der Ladestrom ($I_L$) über Dioden (3) von einem elektrischen Versorgungsnetz (4) in den Gleichspannungskreis (2) geleitet wird, aufweisend die Schritte Ermittlung (5) einer von einer Versorgungsspannung ($U_V$) des elektrischen Versorgungsnetzes (4) abhängigen Gleichspannung ($U_{DC}$) des Gleichspannungskreises (2), Bestimmung (6) einer variablen Unterspannungsschwelle (7) am Gleichspannungskreis (2) und Aktivierung einer Begrenzung (8) des Ladestroms ($I_L$), wenn die Gleichspannung ($U_{DC}$) die variable Unterspannungsschwelle (7) erreicht oder unterschreitet. Die Erfindung betrifft ferner eine Ladestromvorrichtung (13) und einen elektrischen Umrichter (17) mit der Ladestromvorrichtung (13).

FIG 1

EP 4 102 707 A1

**Beschreibung**

Die Erfindung betrifft ein Ladestromverfahren zur Begrenzung eines Ladestroms in einem Gleichspannungskreis, wobei der Ladestrom über Dioden von einem elektrischen Versorgungsnetz in den Gleichspannungskreis geleitet wird. Weiterhin betrifft die Erfindung eine Ladestromvorrichtung und einen elektrischen Umrichter mit der Ladestromvorrichtung.

Bei elektrischen Umrichtern, wie beispielsweise Frequenzumrichtern mit Gleichspannungszwischenkreis für Antriebs- oder Energieversorgungssysteme, ist es oftmals systemimmanent, dass nach einem kurzzeitigen Netzausfall des Versorgungsnetzes, also Spannungsausfall mit Reduzierung bzw. vollständigem Zusammenbruch der Versorgungsspannung des Versorgungsnetzes, und anschließender, meist unmittelbarer Netzwiederkehr, verbunden mit der Wiederkehr der Versorgungsspannung des Versorgungsnetzes, ein hoher Strom, auch als Lade- oder Nachladestrom bezeichnet, durch die meist in Brückenschaltung betriebenen Dioden, hier Gleichrichterdioden, des mit dem Versorgungsnetz verbundenen Gleichrichters in den Gleichspannungskreis des Frequenzumrichters mit seinen angeschlossenen elektrischen Verbrauchern fließt. Meist ist die Versorgungsspannung eine Wechselspannung und das entsprechende Versorgungsnetz ein Wechselstromnetz, ggf. ausgebildet als Drehstromnetz.

Dieses Verhalten kann dem Grundsatz nach auch bei Gleichspannungswandlern festgestellt werden, bei denen eine Gleichspannung eines Gleichspannungsversorgungsnetzes über beispielsweise eine Spule oder einen Wandler-Trafo in bekannter Weise mittels entsprechender Dioden in ein höheres, niedrigeres oder invertiertes Spannungsniveau einer Gleichspannung für einen Gleichspannungskreis gewandelt wird.

Der im beschriebenen Fall fließende Ladestrom kann dabei die Dioden thermisch überlasten, so dass deren Beschädigung oder dauerhafte Zerstörung droht. Eine hierfür aussagekräftige Größe für einen sicheren oder einen gefährdeten Betrieb der Dioden oder anderer elektrischer Bauelemente ist das Integral - auch als Grenzlastintegral bezeichnet - über das Quadrat des Stroms im Gleichspannungskreis oder des Stroms im Versorgungsnetz $i^2 t$ nach der Formel

$$\int_0^{t1} i^2 dt.$$

Der Verlauf des Stroms i ist für die Frage, ob ein sicherer oder ein gefährdeter Betrieb ansteht, zunächst von untergeordneter Bedeutung. Das Grenzlastintegral steht über einen ohmschen Widerstand R des zu betrachtenden elektrischen Bauelements, hier der Diode als Halbleiterbauelement, im Zusammenhang mit einer aufgenommenen Energie E gemäß folgender Formel

$$E = R * \int_0^{t1} i^2 dt.$$

Dazu ist der Widerstand R temperaturabhängig und die aufgenommene Energie E führt in Abhängigkeit von einer Masse m und einer spezifischen Wärmekapazität c einer elektrisch aktiven Zone am Wafer bzw. am Die des Halbleiterbauelementes zu einem Temperaturanstieg $\Delta T$ mittels der Formel

$$\Delta T = \frac{E}{m * c}.$$

Ausgehend von einer gegebenen Ausgangstemperatur ist bei Überschreitung des Grenzlastintegrals eine das Halbleiterbauelement schädigende Temperatur erreichbar. Die Geschwindigkeit, mit der eine entsprechende Grenztemperatur erreichbar ist, wird von der Höhe des Stroms im Halbleiterbauelement bestimmt. Ist der Stromfluss eher gering, kann zumindest ein Teil der entstehenden Verlustwärme an die Umgebung abgeführt werden. Dem Grenzlastintegral werden dazu Bedingungen auferlegt, wie beispielsweise die Integrationszeit.

Der maximal zulässige Wert $i^2 t$ für eine in diesem Kontext eingesetzte Diode wird bestimmt von der Durchlasskennlinie und Fläche der Diode.

Im Detail kann die Höhe des Werts $i^2 t$, der z.B. beim Nachladen mittels des Ladestroms über die Dioden einer Brückenschaltung eines Gleichrichters im Gleichspannungskreis auftritt, von verschiedenen elektrischen Größen abhängen.

So entsteht eine Spannungsdifferenz zwischen dem z.B. Scheitelwert einer wiederkehrenden Versorgungsspannung des Versorgungsnetzes bzw. einer wiederkehrenden Gleichspannung am Gleichspannungskreis und der während des Spanungsausfalls am Gleichspannungskreis abgesunkenen Gleichspannung. Dabei steigt die Spannungsdifferenz, je länger der Spannungsabfall andauert, wobei in Abhängigkeit der Spannungsdifferenz auch der $i^2 t$-Wert des Ladestroms nach Spannungswiederkehr ansteigt.

Ein kritischer Fall für die Höhe des Ladestroms beim Nachladen liegt z.B. dann vor, wenn die Gleichspannung am Gleichspannungskreis auf einen Wert unmittelbar oberhalb einer statisch festgelegten Unterspannungsschwelle abgesunken ist.

Wenn dann die Gleichspannung nach Spannungswiederkehr ansteigt, kann aufgrund der hohen Spannungsdifferenz auch ein ggf. zu hoher Ladestrom fließen und der $i^2 t$ Wert des Grenzlastintegrals den zulässigen Grenzwert für die vom Ladestrom durchflossenen Dioden am Gleichspannungskreis überschreiten. Eine Zerstörung oder dauerhafte Beschädigung aufgrund thermischer Überlastung der Dioden ist so möglich.

Die Unterspannungsschwelle ist hier beispielsweise auf die Gleichspannung am Gleichspannungskreis bezogener Wert, welcher unter Auslegung der am Gleichspannungskreis betriebenen Bauelemente, wie der Dioden, statisch festgelegt wird.

Dies bedeutet, dass die Unterspannungsschwelle für den Betrieb der elektrischen Bauelemente am Gleichspannungskreis nicht geändert, sondern im Rahmen der Festlegung der Rahmenbedingungen für die elektrischen Aktivitäten am Gleichspannungskreis oft einmalig vor Inbetriebnahme der Dioden und der weiteren elektrischen Bauelemente am Gleichspannungskreis ausgelegt wird.

Sinkt die Gleichspannung am Gleichspannungskreis weiter unter die statisch festgelegte Unterspannungsschwelle ab, schaltet sich meist eine Vorladeschaltung mit einer entsprechenden Vorladefunktion für eine Begrenzung des Ladestroms bei Spannungswiederkehr zu.

Auch die Netzimpedanz insbesondere des Versorgungsnetzes hat einen Einfluss auf die Höhe des $i^2t$-Werts des Grenzlastintegrals für den Ladestrom bei Nachladen.

Oftmals wird am Gleichspannungskreis eine elektrische Kapazität betrieben oder sind z.B. Leitungskapazitäten vorhanden, welche nach Spannungswiederkehr bei Spannungsausfall des Versorgungsnetzes mittels des Ladestroms technisch gewollt oder auch unerwünscht nachgeladen werden. Diese Kapazitäten haben ebenfalls einen Einfluss auf die Höhe des $i^2t$ Werts des Grenzlastintegrals für den Ladestrom. Dies gilt insbesondere auch für eine Zwischenkreiskapazität am Gleichspannungszwischenkreis eines Frequenzumrichters.

Bei Antrieben mit Multiachssystemen für beispielsweise Werkzeug- oder Produktionsmaschinen ist die Kapazität am Gleichspannungszwischenkreis des Frequenzumrichters abhängig von der Antriebskonfiguration des Anwenders. So steigt der Ladestrom für die Nachladung der Zwischenkreiskapazität am Gleichspannungszwischenkreis mit Erhöhung der Zwischenkreiskapazität und steigt auch der $i^2t$-Wert des Grenzlastintegrals.

Die statische auszulegende Unterspannungsschwelle wird in diesem Zusammenhang so eingerichtet, dass sie unter einem minimalen Wert der Zwischenkreisspannung am Gleichspannungszwischenkreis liegt, so dass bei einer minimalen Versorgungsspannung des Versorgungsnetzes der bestimmungsgemäße, fehlerfreie Betrieb des Frequenzumrichters noch zulässig ist.

Nach einer bisher üblichen Vorgehensweise wird der $i^2t$-Wert des Grenzlastintegrals für die z.B. Dioden an einem Gleichspannungskreis nach dem ungünstigsten Betriebsfall ausgelegt, wobei folgende Parameter angenommen werden:

- Die maximal auftretende Versorgungsspannung des Versorgungsnetzes bzw. die maximal auftretende Gleichspannung des Gleichspannungskreises für einen noch bestimmungsgemäßen, fehlerfreien Betrieb des Gleichspannungskreises bestimmt eine maximal zulässige obere Toleranzschwelle für die entsprechende Spannung.

- Die minimal auftretende Gleichspannung am Gleichspannungskreis für einen noch bestimmungsgemäßen, fehlerfreien Betrieb des Gleichspannungskreises ist praktisch identisch zu der statischen ausgelegten Unterspannungsschwelle.

- Die Kapazität am Gleichspannungskreis muss mit einem maximal zulässigen Wert angenommen werden, unabhängig von einer aus Sicht des Anwenders im Betrieb tatsächlich benötigten niedrigeren Kapazität.

Aus dieser Vorgehensweise ergibt sich, dass zur Auslegung die $i^2t$-Festigkeit für elektrische Bauelemente, wie z.B. der Dioden für einen Gleichrichtbetrieb eines Frequenzumrichters, eine maximale und dazu statische Spannungsdifferenz aufgrund der statisch auszulegenden Unterspannungsschwelle bestimmt wird. Dies hat den Nachteil, dass großflächige, für die meisten Anwendungen überdimensionierte und deshalb teuren Dioden zum Einsatz kommen müssen.

Auch kann zwar die maximal zulässige Kapazität begrenzt werden, um den Einsatz teurer Dioden zu vermeiden, was jedoch Anwender beispielsweise in deren benötigter Antriebskonfiguration von Multiachssystemen bei Werkzeug- oder Produktionsmaschinen einschränkt.

Der Erfindung liegt die Aufgabe zugrunde, ein Ladestromverfahren, eine Ladestromvorrichtung und einen elektrischen Umrichter mit der Ladestromvorrichtung vorzuschlagen, welche einen Ladestrom für einen Gleichspannungskreis im Falle einer Spannungswiederkehr nach einem Spannungsausfall gegenüber dem Stand der Technik verbessert begrenzt.

Die Aufgabe wird durch ein Ladestromverfahren mit den in Anspruch 1 angegebenen Merkmalen, durch eine Ladestromvorrichtung mit den in Anspruch 9 angegebenen Merkmalen und mit einem elektrischen Umrichter mit den in Anspruch 15 angegebenen Merkmalen gelöst.

Für die Lösung der Aufgabe wird ein Ladestromverfahren zur Begrenzung eines Ladestroms in einem Gleichspannungskreis vorgeschlagen, wobei der Ladestrom über Dioden von einem elektrischen Versorgungsnetz in den Gleichspannungskreis geleitet wird, aufweisend die Schritte: Ermittlung einer von einer Versorgungsspannung des elektrischen Versorgungsnetzes abhängigen Gleichspannung am Gleichspannungskreis, Bestimmung einer variablen Unterspannungsschwelle am Gleichspannungskreis und Aktivierung der Begrenzung des Ladestroms, wenn die Gleichspannung die variable Unterspannungsschwelle erreicht oder unterschreitet.

Das Ladestromverfahren ist besonders geeignet für einen Gleichrichtbetrieb der Dioden, wobei diese Dioden meist mittels einer Anordnung in einer Brückenschaltung betrieben werden.

In vorteilhafter Weise wird während des bestimmungsgemäßen Betriebs des Gleichspannungskreises, so für den Gleichrichtbetrieb der Dioden am Gleichspannungskreis, eine variable Unterspannungsschwelle zum Schutz insbesondere der Dioden aber auch anderer elektrischer Bauteile, welche am oder mittels des Gleichspannungskreises betrieben werden, implementiert.

Mittels dieser variablen Unterspannungsschwelle kann nach einem Spannungsausfall oder Spannungsabfall mit anschließender Spannungswiederkehr der Versorgungsspannung des elektrischen Versorgungsnetzes, und damit der Gleichspannung am Gleichspannungskreis, der Ladestrom zum Nachladen des Gleichspannungskreises und der damit verbundenen Energieverbraucher, wie z.B. einer über einen Wechselrichter am Gleichspannungskreis betriebenen elektrischen Last, nunmehr effizient und anwendungsorientiert an die elektrischen Bedingungen am Gleichspannungskreis im Gegensatz zu bekannten Ladestromverfahren mit nur einer statische auszulegenden Unterspannungsschwelle angepasst werden.

Das bedeutet, dass der Ladestrom zur Nachladung des Gleichspannungskreises bei Spannungswiederkehr nach dem Spannungsausfall deutlich gegenüber der bisherigen Lösung reduziert werden kann, bei der die statische Unterspannungsschwelle unflexibel, bestimmt für maximale elektrische Anforderungen des Gleichspannungskreises, ausgelegt werden muss. Die am Gleichspannungskreis einzusetzenden elektrischen Bauelemente, wie insbesondere die Dioden, können mit Blick auf deren elektrische Betriebsdaten sowohl aus Kostensicht wie auch aus Sicht eines reduzierbaren Bauraumbedarfs für den Einsatz beispielsweise in elektrischen Umrichtern vorteilhaft ausgewählt werden.

Vorteilhafte Ausgestaltungsformen des Ladestromverfahrens sind in den abhängigen Ansprüchen angegeben.

Eine erste vorteilhafte Ausgestaltungsform des Ladestromverfahrens weist den Schritt einer Bildung einer Spannungsdifferenz zwischen der Gleichspannung und der variablen Unterspannungsschwelle auf, wobei die Spannungsdifferenz, unabhängig vom Wert der Gleichspannung, unverändert bleibt.

Erfindungsgemäß soll die Spannungsdifferenz möglichst klein gehalten werden, damit zur Überwindung der Spannungsdifferenz der am Gleichspannungskreis fließende Ladestrom nach einem Spannungsausfall oder Spannungsabfall mit anschließender Spannungswiederkehr der Versorgungsspannung des elektrischen Versorgungsnetzes, und damit der Gleichspannung am Gleichspannungskreis, die $i^2$t-Festigkeit des Grenzwertintegrals für insbesondere die Dioden gegenüber der herkömmlichen Lösung in herstellt und dies auch nach Absinken der Gleichspannung auf einen Wert nahe der für einen bestimmungsgemäßen und fehlerfreien Betrieb des Gleichspannungskreises noch zulässigen minimalen Gleichspannung.

Damit die Spannungsdifferenz, unabhängig vom Wert der ermittelten Gleichspannung, in vorteilhafter Weise unverändert bleibt, kann die variable Unterspannungsschwelle mit einem absoluten, gleichbleibenden Spannungswert unter die ermittelte Gleichspannung des Gleichspannungskreises gelegt werden. Jedoch soll die variable Unterspannungsschwelle größer bleiben als die für einen bestimmungsgemäßen und fehlerfreien Betrieb des Gleichspannungskreises noch zulässige minimale Gleichspannung.

Eine weitere vorteilhafte Ausgestaltungsform des Ladestromverfahrens weist den Schritt einer Bildung einer Spannungsdifferenz zwischen der Gleichspannung und der variablen Unterspannungsschwelle auf, wobei sich die Spannungsdifferenz abhängig vom Wert der Gleichspannung verändert.

Um die Spannungsdifferenz änderbar an den Wert der Gleichspannung in vorteilhafter Weise zu koppeln, kann die variable Unterspannungsschwelle als prozentualer Wert zur Höhe der ermittelten Gleichspannung des Gleichspannungskreises unter die Gleichspannung gelegt werden, wobei sich 20% der Gleichspannung als besonders vorteilhaft erweisen. Somit ist die Spannungsdifferenz hinreichend klein zur Einhaltung der $i^2$t-Festigkeit des Grenzwertintegrals für den Schutz vor einem zu hohen Ladestrom insbesondere für die Dioden, jedoch wird bei einem sehr kurzen und eher geringen Spannungseinbruch die variable Unterspannungsschwelle nicht vorschnell erreicht.

Jedoch soll die Unterspannungsschwelle größer bleiben als die für einen bestimmungsgemäßen und fehlerfreien Betrieb des Gleichspannungskreises noch zulässige minimale Gleichspannung.

Bei einer weiteren vorteilhaften Ausgestaltungsform des Ladestromverfahrens wird zur Begrenzung des Ladestroms eine elektrische Vorladung des Gleichspannungskreises und/oder eine Energieentnahmereduktion am Gleichspannungskreis aktiviert.

Die Begrenzung des Ladestroms wird am Gleichspannungskreis wirksam, wenn mit der Spannungswiederkehr, nach dem Spannungsabfall bzw. dem Spannungsausfall, das Nachladen des Gleichspannungskreises mittels des Ladestroms einsetzt.

Dazu kann die elektrische Vorladung mittels einer Vorladeschaltung am Gleichspannungskreis den Ladestrom begrenzen. Derartige Vorladeschaltungen weisen meist einen Vorladewiderstand auf, der für die elektrische Vorladung in den Gleichspannungskreis geschaltet wird.

Die Energieentnahmereduktion zur Begrenzung des Ladestroms am Gleichspannungskreis kann vorteilhaft durchgeführt werden, indem elektrische Verbraucher vom Gleichspannungskreis getrennt werden. Dazu gehört beispielsweise auch ein Wechselrichter welcher mit dem Gleichspannungskreis verbunden ist und eine elektrische Maschine betreibt. In diesem Fall wird der Wechselrichter eine Bestromung der elektrischen Maschine aussetzen.

Bei einer weiteren vorteilhaften Ausgestaltungsform des Ladestromverfahrens erfolgt die Bestimmung der variablen Unterspannungsschwelle in Abhängigkeit einer Kapazität am Gleichspannungskreis.

Für beispielsweise elektrische Antriebe bei Multiachssystemen kann die sich je nach Aufgabenstellung ändernde Kapazität am Gleichspanungszwischenkreis von Frequenzumrichtern berücksichtigt werden und die Unterspannungsschwelle an die betreffende Antriebskonfiguration vorteilhaft angepasst werden, insbesondere kann im Gegensatz zu bekannten Lösungen eine zum Einsatz kommenden Gesamtkapazität am Gleichspannungskreis erhöht werden, ohne dass der Ladestrom am Gleichspannungskreis nach Spannungsabfall oder Spannungsausfall mit Spannungswiederkehr Schäden an den eingesetzten elektrischen Bauelementen, wie insbesondere den Dioden verursacht.

Beim Einsatz einer größeren Kapazität am Gleichspannungskreis wird die variable Unterspannungsschwelle gegenüber der ermittelten Gleichspannung erhöht und somit näher an die ermittelte Gleichspannung gebracht, währenddessen beim Einsatz einer kleineren Kapazität am Gleichspannungskreis die variable Unterspannungsschwelle gegenüber der ermittelten Gleichspannung verringert und somit weiter von der ermittelten Gleichspannung entfernt wird.

Bei einer weiteren vorteilhaften Ausgestaltungsform des Ladestromverfahrens erfolgt die Bestimmung der variablen Unterspannungsschwelle in Abhängigkeit einer Netzimpedanz am elektrischen Versorgungsnetz.

Eine Ermittlung der Netzimpedanz erfolgt nach bekannten Verfahren zur Netzidentifikation beispielsweise bei einem aktiven Netzstromrichter mit Rückwärtsdioden. Bei einer kleinen Netzimpedanz des elektrischen Versorgungsnetzes wird die variable Unterspannungsschwelle gegenüber der ermittelten Gleichspannung vorteilhaft erhöht und somit näher an die ermittelte Gleichspannung gebracht, währenddessen bei einer großen Netzimpedanz des elektrischen Versorgungsnetzes die variable Unterspannungsschwelle gegenüber der ermittelten Gleichspannung vorteilhaft verringert und somit weiter von der ermittelten Gleichspannung entfernt wird.

Bei einer weiteren vorteilhaften Ausgestaltungsform des Ladestromverfahrens wird die Bestimmung der variablen Unterspannungsschwelle durchgeführt, wenn die Gleichspannung über einen bestimmten Zeitbereich ansteigt.

Falls die variable Unterspannungsschwelle in dem Moment aktualisiert wird, wenn die ermittelte Gleichspannung in Folge eines Spannungsausfalls absinkt, würde die variable Unterspannungsschwelle im gleichen Maße absinken, wie die ermittelte Gleichspannung absinkt. Ein in diesem Fall ggf. erwünschtes Erreichen und Unterschreiten der variablen Unterspannungsschwelle wäre so kaum möglich.

Ein Ansteigen der ermittelten Gleichspannung zur Bestimmung bzw. Aktualisierung der variablen Unterspannungsschwelle über den bestimmten Zeitbereich liegt dann vor, wenn eine Erhöhung der gemittelten Gleichspannung oder der Vergrößerung einer Hüllkurve der welligen Gleichspannung - basierend auf der Wechselspannung der Versorgungsspannung - über den bestimmten Zeitbereich eintritt.

Bei einer weiteren vorteilhaften Ausgestaltungsform des Ladestromverfahrens erfolgt die Bestimmung der variablen Unterspannungsschwelle mittels eines Modulationsindex einer Reglung für schaltbare Halbleiter, wobei die Dioden jeweils als Rückwärtsdioden parallel mit den schaltbaren Halbleitern einer Brückenschaltung verschaltet sind und wobei der Modulationsindex als Quotient aus der Versorgungsspannung des elektrischen Versorgungsnetzes und der Gleichspannung des Gleichspannungskreises ausgebildet ist.

Aktive Netzstromrichter regeln den Spannungswert für den Gleichspannungskreis bzw. den Gleichspannungszwischenkreis auf einen konstanten Sollwert. In diesem Fall kann die Versorgungsspannung des Versorgungsnetzes, und damit auch ein Spannungsausfall oder Spannungseinbruch, nicht direkt mit Blick auf die Gleichspannung am Gleichspannungskreis in Verbindung gebracht werden. Auch wird die Versorgungspannung des Versorgungsnetzes in vielen Fällen nicht gemessen.

Bei einem aktiven Netzstromrichter ist neben dem Spannungswert der Gleichspannung am Gleichspannungskreis auch der Modulationsindex für einen Steuersatz der Halbleiterschalter des aktiven Netzstromrichter bekannt. Dieser Modulationsindex beschreibt das Verhältnis insbesondere eines Scheitelwerts der Versorgungsspannung des Versorgungsnetzes und der Gleichspannung am Gleichspannungskreis bzw. Gleichspannungszwischenkreis. Er wird von einem Regler des aktiven Netzstromrichters so eingestellt, dass mit der vorhandenen Versorgungsspannung des Versorgungsnetzes die gewünschte Gleichspannung am Gleichspannungskreis erreicht wird.

Für die Lösung der Aufgabe wird weiterhin Ladestromvorrichtung zur Begrenzung eines Ladestroms vorgeschlagen, aufweisend einen Gleichspannungskreis, Dioden, welche mit einem elektrischen Versorgungsnetz verbindbar und mit dem Gleichspannungskreis verbunden sind, wobei der Ladestrom über die Dioden von dem elektrischen Versorgungsnetz in den Gleichspannungskreis leitbar ist, und eine Prozessoreinheit, eingerichtet zur Ermittlung einer von einer Versorgungsspannung des elektrischen Versorgungsnetzes abhängigen Gleichspannung am Gleichspannungskreis, eingerichtet zur Bestimmung einer variablen Unterspannungsschwelle am Gleichspannungskreis und eingerichtet zur Aktivierung der Begrenzung des Ladestroms, wenn die Gleichspannung die variable Unterspannungsschwelle erreicht oder unterschreitet.

Die Ladestromvorrichtung ist dazu ausgebildet, die Schritte des Ladestromverfahrens auszuführen.

Bei einer ersten vorteilhaften Ausgestaltungsform der Ladestromvorrichtung ist die Prozessoreinheit zur Bildung einer Spannungsdifferenz zwischen der Gleichspannung und der variablen Unterspannungsschwelle eingerichtet, wobei die Spannungsdifferenz, unabhängig vom Wert der Gleichspannung, unveränderbar bleibt oder wobei die Spannungsdifferenz, abhängig vom Wert der Gleichspannung, veränderbar bleibt.

Bei einer weiteren vorteilhaften Ausgestaltungsform der Ladestromvorrichtung ist zur Begrenzung des Ladestroms eine elektrische Vorladung des Gleichspannungskreises mittels einer Vorladeeinheit und/oder eine Energieentnahmereduktion am Gleichspannungskreis mittels einer Abschalteinheit aktivierbar.

Vorladeeinheiten finden z.B. bei Frequenzumrichtern mit Gleichspannungszwischenkreis und Zwischenkreiskondensator am Gleichspannungszwischenkreis Verwendung. Sobald nach Spannungswiederkehr der Ladestrom im Gleichspannungskreis zu fließen beginnt, kann dieser mittels durch die elektrische Vorladung mittels der Vorladeeinheit vorteilhaft begrenzt werden.

Die Energieentnahmereduktion zur Begrenzung des Ladestroms am Gleichspannungskreis kann vorteilhaft durchgeführt werden, indem elektrische Verbraucher vom Gleichspannungskreis getrennt werden. Dazu ist beispielsweise eine elektrische Maschine über einen Wechselrichter mit dem Gleichspannungskreis verbunden. Der Wechselrichter betreibt einerseits die elektrische Maschine, ist aber andererseits auch als Abschalteinheit zur Energieentnahmereduktion am Gleichspannungskreis vorgesehen. In diesem Fall wird der Wechselrichter eine Bestromung der elektrischen Maschine aussetzen.

Bei einer weiteren vorteilhaften Ausgestaltungsform der Ladestromvorrichtung ist die Prozessoreinheit eingerichtet, die Bestimmung der variablen Unterspannungsschwelle in Abhängigkeit einer Kapazität am Gleichspannungskreis und/oder in Abhängigkeit einer Netzimpedanz am elektrischen Versorgungsnetz durchzuführen.

Bei einer weiteren vorteilhaften Ausgestaltungsform der Ladestromvorrichtung ist die Prozessoreinheit eingerichtet, die Bestimmung der variablen Unterspannungsschwelle durchzuführen, wenn mittels einer Anstiegskontrollfunktion ermittelbar ist, dass die Gleichspannung über einen bestimmten Zeitbereich ansteigt.

Bei einer weiteren vorteilhaften Ausgestaltungsform der Ladestromvorrichtung ist die Prozessoreinheit eingerichtet, zur Bestimmung der variablen Unterspannungsschwelle einen Modulationsindex einer Reglung für schaltbare Halbleiter einer Brückenschaltung vorzusehen, wobei die Dioden jeweils als Rückwärtsdioden parallel mit den schaltbaren Halbleitern verschaltet sind und wobei der Modulationsindex als Quotient aus der Versorgungsspannung des elektrischen Versorgungsnetzes und der Gleichspannung des Gleichspannungskreises ausgebildet ist.

Für die Lösung der Aufgabe wird ebenfalls ein elektrischer Umrichter mit der erfindungsgemäßen Ladestromvorrichtung vorgeschlagen, wobei eine elektrische Maschine mit dem Gleichspannungskreis elektrisch verbindbar und über die Dioden und den Gleichspannungskreis am elektrischen Versorgungsnetz betreibbar ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Es zeigt:

FIG 1     eine schematische Darstellung eines Struktogramms des erfindungsgemäßen Ladestromverfahrens,

FIG 2     eine erste schematische Darstellung eines Diagramms mit einer variablen Unterspannungsschwelle für das erfindungsgemäße Ladestromverfahren gemäß FIG 1,

FIG 3     eine zweite schematische Darstellung eines Diagramms mit einem Ausführungsbeispiel der variablen Unterspannungsschwelle nach FIG 2 für das erfindungsgemäße Ladestromverfahren gemäß FIG 1,

FIG 4     eine dritte schematische Darstellung eines Diagramms mit der variablen Unterspannungsschwelle nach FIG 2 oder FIG 3 zum Zeitpunkt eines Spannungsausfalls einer Gleichspannung an einem Gleichspannungskreis in Abhängigkeit eines Spannungsausfalls einer Versorgungsspannung eines Versorgungsnetzes für das erfindungsgemäße Ladestromverfahren gemäß FIG 1 und

FIG 5     eine schematische Darstellung eines erfindungsgemäßen elektrischen Umrichters mit einer erfindungsgemäßen Ladevorrichtung für das erfindungsgemäße Ladestromverfahren gemäß FIG 1.

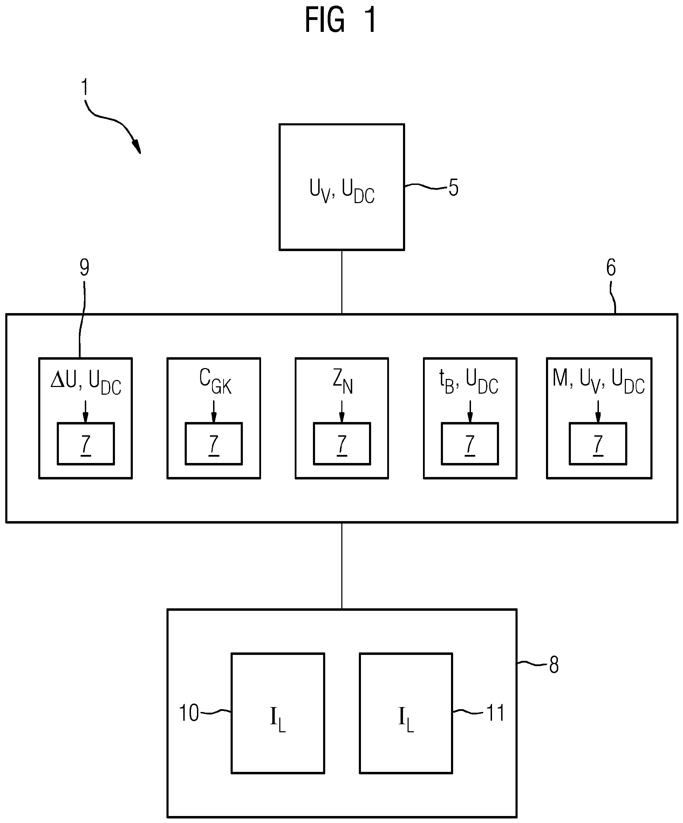

Die FIG 1 zeigt eine schematische Darstellung eines Struktogramms des erfindungsgemäßen Ladestromverfahrens 1.

Das Ladestromverfahren 1 begrenzt einen Ladestrom $I_L$ in einem Gleichspannungskreis, wobei der Ladestrom $I_L$ über Dioden von einem elektrischen Versorgungsnetz in den Gleichspannungskreis geleitet wird.

In einem ersten Schritt des Ladestromverfahrens 1 wird einen Ermittlung 5 einer von einer Versorgungsspannung $U_V$ des elektrischen Versorgungsnetzes abhängigen Gleichspannung $U_{DC}$ am Gleichspannungskreis durchgeführt. Sowohl die Versorgungsspannung $U_V$ am elektrischen Versorgungsnetz wie auch die Gleichspannung $U_{DC}$ am Gleichspannungskreis können dazu jeweils gemessen aber auch aus weiteren elektrischen Größen ermittelt bzw. berechnet werden.

In einem weiteren Schritt erfolgt die Bestimmung 6 einer variablen Unterspannungsschwelle 7 am Gleichspannungskreis.

Zur Bestimmung 6 der variablen Unterspannungsschwelle 7 erfolgt eine Bildung 9 einer Spannungsdifferenz ΔU zwischen der Gleichspannung $U_{DC}$ und der variablen Unterspannungsschwelle 7.

Dazu kann die Spannungsdifferenz ΔU gebildet werden, indem diese, unabhängig vom Wert der Gleichspannung $U_{DC}$, unverändert bleibt.

Die Spannungsdifferenz ΔU kann ebenfalls gebildet werden, indem sich die Spannungsdifferenz ΔU abhängig vom Wert der Gleichspannung $U_{DC}$ verändert.

Die Bestimmung 6 der variablen Unterspannungsschwelle 7 im Ausführungsbeispiel gemäß FIG 1 kann sowohl in Abhängigkeit einer Kapazität $C_{GK}$ am Gleichspannungskreis wie auch in Abhängigkeit einer Netzimpedanz $Z_N$ am elektrischen Versorgungsnetz durchgeführt werden.

Die Bestimmung 6 der variablen Unterspannungsschwelle 7 wird nur dann durchgeführt, wenn die Gleichspannung $U_{DC}$ über einen bestimmten Zeitbereich $t_B$ ansteigt.

Auch kann die Bestimmung 6 der variablen Unterspannungsschwelle 7 mittels eines Modulationsindex M einer Reglung für schaltbare Halbleiter erfolgen. In diesem Fall sind die Dioden jeweils als Rückwärtsdioden parallel mit den schaltbaren Halbleitern einer Brückenschaltung verschaltet, wobei die Brückenschaltung dann beispielsweise in einer aktiven Einspeisung zwischen dem Versorgungsnetz und dem Gleichspannungskreis im Gleichrichterbetrieb zum Einsatz kommen kann. Der Modulationsindex M ist dabei als Quotient aus der Versorgungsspannung $U_V$ des elektrischen Versorgungsnetzes und der Gleichspannung $U_{DC}$ des Gleichspannungskreises ausgebildet.

Die Aktivierung einer Begrenzung 8 des Ladestroms $I_L$ beginnt dann, wenn die Gleichspannung $U_{DC}$ die variable Unterspannungsschwelle 7 erreicht oder unterschreitet. Die Begrenzung 8 wird wirksam, wenn nach dem Spannungsabfall und der Spannungswiederkehr der Ladestrom im Gleichspannungskreis zu fließt.

Zur Begrenzung 8 des Ladestroms $I_L$ ist in FIG 1 eine elektrische Vorladung 10 des Gleichspannungskreises und eine Energieentnahmereduktion 11 am Gleichspannungskreis aktiviert.

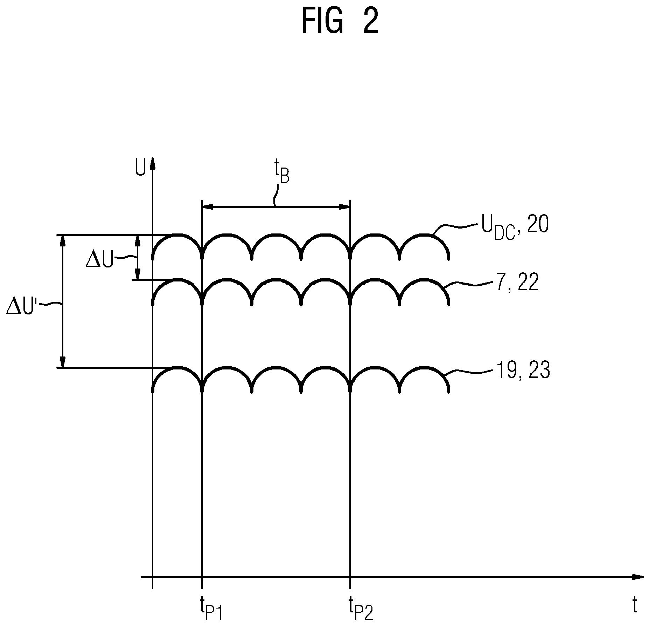

Mit der FIG 2 wird eine erste schematische Darstellung eines Diagramms mit einer variablen Unterspannungsschwelle 7 für das erfindungsgemäße Ladestromverfahren 1 gemäß FIG 1 aufgezeigt.

Das Diagramm weist zwei Achsen auf, wobei die eine Achse mit einer Zeit t und die andere Achse mit einer Spannung U bezeichnet ist.

Einer auf der Achse der Spannung U als wellige Gleichspannung 20 aufgetragenen Gleichspannung $U_{DC}$ folgt im Abstand einer Spannungsdifferenz ΔU die variable Unterspannungsschwelle 7, welche als eine an die wellige Gleichspannung 20 angepasste variable Unterspannungsschwelle 22 ausgebildet ist.

Auf der Achse der Spannung U folgt der als wellige Gleichspannung 23 aufgetragenen Gleichspannung $U_{DC}$ im Abstand einer weiteren Spannungsdifferenz ΔU' die statische Unterspannungsschwelle 19, welche als eine an die wellige Gleichspannung 20 angepasste statische Unterspannungsschwelle 23 ausgebildet ist. Hier zeigt sich, dass die variable Unterspannungsschwelle 7 der als wellige Gleichspannung 20 ausgebildeten Gleichspannung $U_{DC}$ in einem engeren Abstand flexibel folgen kann, wobei die statische Unterspannungsschwelle 19 unverändert bleibt.

Zwischen einem ersten Zeitpunkt $t_{P1}$ und einem zweiten Zeitpunkt $t_{P2}$ ist ein Zeitbereich $t_B$ aufgespannt. Der Zeitraum $t_B$ wird dabei so gewählt, dass er kürzer ist als eine zu erwartende Schwankung der Versorgungsspannung des Versorgungsnetzes. Als typischer Wert wird 10ms vorgeschlagen.

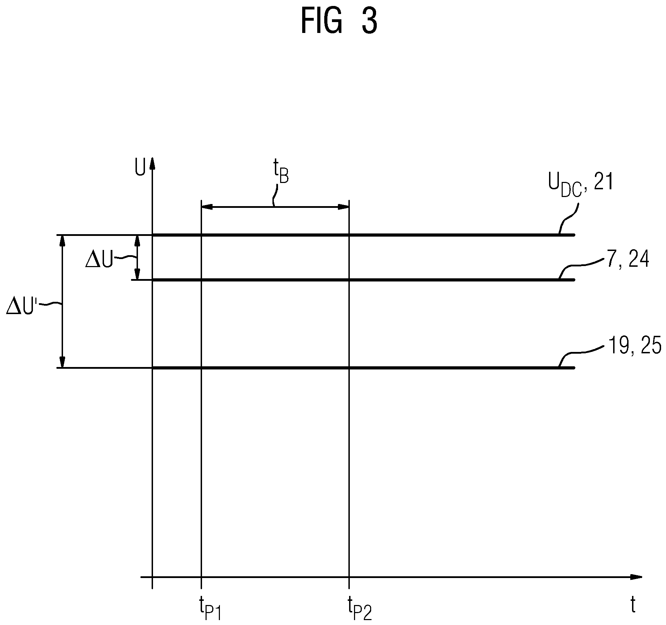

In FIG 3 wird eine zweite schematische Darstellung eines Diagramms mit einem Ausführungsbeispiel der variablen Unterspannungsschwelle 7 nach FIG 2 für das erfindungsgemäße Ladestromverfahren 1 gemäß FIG 1 gezeigt.

Das Diagramm weist analog zum Diagramm der FIG 2 zwei Achsen auf, wobei die eine Achse ebenfalls mit der Zeit t und die andere Achse mit der Spannung U bezeichnet ist und wobei zwischen dem ersten Zeitpunkt $t_{P1}$ und einem zweiten Zeitpunkt $t_{P2}$ wie in FIG 2 ein Zeitbereich $t_B$ aufgespannt ist.

Einer auf der Achse der Spannung U als gemittelte Gleichspannung 21 aufgetragenen Gleichspannung $U_{DC}$ folgt im Abstand der Spannungsdifferenz ΔU die variable Unterspannungsschwelle 7, welche als eine an die gemittelte Gleichspannung 20 angepasste variable Unterspannungsschwelle 24 ausgebildet ist.

Auf der Achse der Spannung U folgt der als gemittelte Gleichspannung 25 aufgetragenen Gleichspannung $U_{DC}$ im Abstand der weiteren Spannungsdifferenz ΔU' die statische Unterspannungsschwelle 19, welche als eine an die gemittelte Gleichspannung 21 angepasste statische Unterspannungsschwelle 25 ausgebildet ist. Auch hier in FIG 3 zeigt sich, dass die variable Unterspannungsschwelle 7 der als gemittelte Gleichspannung 21 ausgebildeten Gleichspannung $U_{DC}$ in einem engeren Abstand flexibel folgen kann, wobei die statische Unterspannungsschwelle 19 unverändert bleibt.

Sowohl FIG 2 wie auch FIG 3 zeigen, dass die variable Unterspannungsschwelle 7 gegenüber der herkömmlichen statische Unterspannungsschwelle 19 deutlich höher und näher an der ermittelten Gleichspannung $U_{DC}$ liegt. Die Spannungsdifferent ΔU zwischen variabler Unterspannungsschwelle 7 und Gleichspannung $U_{DC}$ ist demnach ebenfalls deutlich reduziert gegenüber der weiteren Spannungsdifferent ΔU'. Dadurch wird auch der nach dem Spannungsabfall und der Spannungswiederkehr einsetzende Stromfluss des Ladestroms und somit der i²t-Wert deutlich gegenüber der bekannten Lösung mit der statischen Unterspannungsschwelle 19 reduziert.

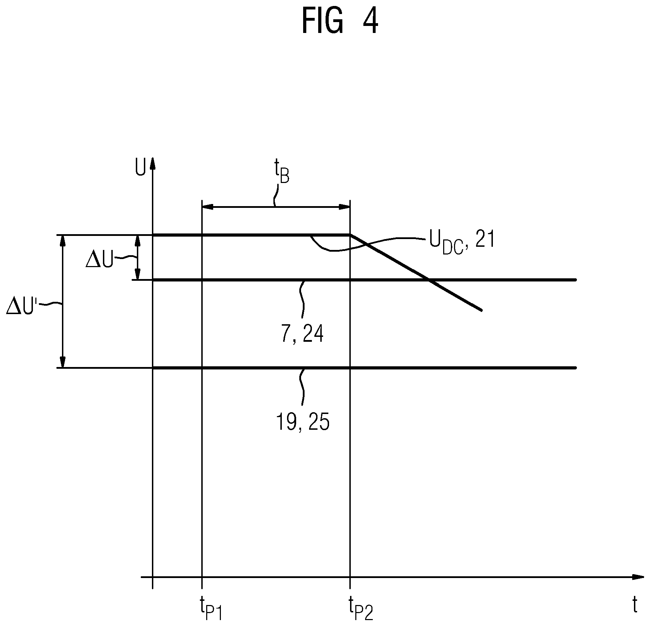

Die FIG 4 zeigt eine dritte schematische Darstellung eines Diagramms mit der variablen Unterspannungsschwelle 7 nach FIG 3 zum zweiten Zeitpunkt $t_{P2}$ eines Spannungsausfalls einer Gleichspannung $U_{DC}$ an einem Gleichspannungskreis für das erfindungsgemäße Ladestromverfahren gemäß FIG 1.

Das Diagramm der FIG 4 ist analog dem Diagramm von FIG 3 zu verstehen. Jedoch erfolgt zum zweiten Zeitpunkt $t_{P2}$ ein Spannungsabfall der Gleichspannung $U_{DC}$, getrieben von dem Spannungsabfall der Versorgungsspannung des Versorgungsnetzes, wobei die Gleichspannung $U_{DC}$ die variable Unterspannungsschwelle 7 erreicht und unterschreitet.

Es wird in FIG 4 deutlich, dass wenn die variable Unterspannungsschwelle 7 ab dem zweiten Zeitpunkt $t_{P2}$ weiter aktualisiert werden würde, diese in einem gleichen Maß absinken würde, wie die ermittelte Gleichspannung $U_{DC}$ tatsächlich absinkt. Ein im Falle eines anstehenden Spannungsabfalls erwünschtes Erreichen und Unterschreiten der variablen Unterspannungsschwelle 7 wäre so kaum möglich.

Demnach muss die Unterspannungsschwelle 7 dann aktualisiert werden, wenn die ermittelte Gleichspannung $U_{DC}$ über den Zeitbereich $t_B$ steigt. Ein Ansteigen der ermittelten Gleichspannung $U_{DC}$ zur Bestimmung bzw. Aktualisierung der variablen Unterspannungsschwelle 7 über den bestimmten Zeitbereich $t_B$ liegt dann vor, wenn eine Erhöhung der hier als gemittelte Gleichspannung 21 ausgebildeten Gleichspannung $U_{DC}$ über den bestimmten Zeitbereich $t_B$ eintritt.

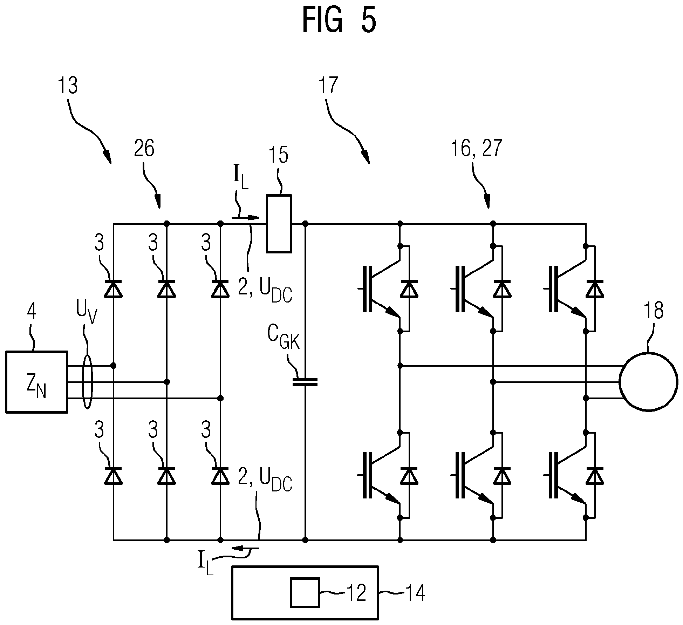

Mittels der FIG 5 wird eine schematische Darstellung eines erfindungsgemäßen elektrischen Umrichters mit einer erfindungsgemäßen Ladevorrichtung für das erfindungsgemäße Ladestromverfahren gemäß FIG 1 gezeigt.

Der elektrische Umrichter 17, hier auch näher dargestellt als Frequenzumrichter mit einem Gleichspannungskreis 2 - auch Gleichspannungszwischenkreis genannt - weist neben der Ladevorrichtung 13 einen passiven Gleichrichter 26 mit Dioden 3 auf, welche mittels dreier Brückenzweige einer Brückenschaltung mit dem Gleichspannungskreis 2 elektrisch verbunden sind. Der Gleichrichter 26 mit seinen Dioden 3 ist mit einem Versorgungsnetz 4, hier dreiphasig aufgezeigt, verbunden. An dem dreiphasigen Versorgungsnetz 4 liegt die Versorgungsspannung $U_V$ an. Das Versorgungsnetz 4 wird auch durch seine Netzinduktivität $Z_N$ bestimmt.

Über hier einen Wechselrichter 27 ist eine elektrische Maschine 18 mit dem Gleichspannungskreis 2 elektrisch verbunden. Mit dem Gleichspannungskreis 2 ist ferner eine Kapazität $C_{GK}$ als hier Gleichspannungszwischenkreiskapazität verbunden. Am Gleichspannungskreis 2 liegt die Gleichspannung 2 an. Im Falle der Spannungswiederkehr nach einem Spannungsausfall fließt im Gleichspannungskreis 2 der Ladestrom $I_L$. Er kann begrenzt werden durch eine elektrische Vorladung mittels einer Vorladeeinheit 15 oder durch eine Energieentnahmereduktion mittels einer Abschalteinrichtung 16 - hier dem Wechselrichter 27 - welche die elektrische Maschine 18 elektrisch vom Gleichspannungskreis 2 trennt.

Ferner kann mittels einer Prozessoreinheit 14 das erfindungsgemäße Ladeverfahren durchgeführt werden, wobei die Prozessoreinheit 14 eine Anstiegskontrolle 12 zur Anstiegs- oder Reduzierungsermittlung der Gleichspannung $U_{DC}$ aufweist.

## Patentansprüche

1. Ladestromverfahren (1) zur Begrenzung (8) eines Ladestroms ($I_L$) in einem Gleichspannungskreis (2), wobei der Ladestrom ($I_L$) über Dioden (3) von einem elektrischen Versorgungsnetz (4) in den Gleichspannungskreis (2) geleitet wird, aufweisend die Schritte

    - Ermittlung (5) einer von einer Versorgungsspannung ($U_V$) des elektrischen Versorgungsnetzes (4) abhängigen Gleichspannung ($U_{DC}$) am Gleichspannungskreis (2),
    - Bestimmung (6) einer variablen Unterspannungsschwelle (7) am Gleichspannungskreis (2) und
    - Aktivierung der Begrenzung (8) des Ladestroms ($I_L$), wenn die Gleichspannung ($U_{DC}$) die variable Unterspannungsschwelle (7) erreicht oder unterschreitet.

2. Ladestromverfahren (1) nach Anspruch 1, aufweisend den Schritt einer Bildung (9) einer Spannungsdifferenz ($\Delta U$) zwischen der Gleichspannung ($U_{DC}$) und der variablen Unterspannungsschwelle (7), wobei die Spannungsdifferenz ($\Delta U$), unabhängig vom Wert der Gleichspannung ($U_{DC}$), unverändert bleibt.

3. Ladestromverfahren (1) nach Anspruch 1, aufweisend den Schritt einer Bildung (9) einer Spannungsdifferenz ($\Delta U$) zwischen der Gleichspannung ($U_{DC}$) und der variablen Unterspannungsschwelle (7), wobei sich die Spannungsdifferenz ($\Delta U$) abhängig vom Wert der Gleichspannung ($U_{DC}$) verändert.

4. Ladestromverfahren (1) nach einem der vorhergehenden Ansprüche, wobei zur Begrenzung (8) des Ladestroms ($I_L$) eine elektrische Vorladung (10) des Gleichspannungskreises (2) und/oder eine Energieentnahmereduktion (11) am Gleichspannungskreis (2) aktiviert wird.

5. Ladestromverfahren (1) nach einem der vorhergehenden Ansprüche, wobei die Bestimmung (6) der variablen Unterspannungsschwelle (7) in Abhängigkeit einer Kapazität ($C_{GK}$) am Gleichspannungskreis (2) erfolgt.

6. Ladestromverfahren (1) nach einem der vorhergehenden Ansprüche, wobei die Bestimmung (6) der variablen Unterspannungsschwelle (7) in Abhängigkeit einer Netzimpedanz ($Z_N$) am elektrischen Versorgungsnetz (4) erfolgt.

7. Ladestromverfahren (1) nach einem der vorhergehenden Ansprüche, wobei die Bestimmung (6) der variablen Unterspannungsschwelle (7) durchgeführt wird, wenn die Gleichspannung ($U_{DC}$) über einen bestimmten Zeitbereich ($t_B$) ansteigt.

8. Ladestromverfahren (1) nach einem der Ansprüche 1 bis 7, wobei die Bestimmung (6) der variablen Unterspannungsschwelle (7) mittels eines Modulationsindex (M) einer Reglung für schaltbare Halbleiter erfolgt, wobei die Dioden (3) jeweils als Rückwärtsdioden parallel mit den schaltbaren Halbleitern einer Brückenschaltung verschaltet sind und wobei der Modulationsindex (M) als Quotient aus der Versorgungsspannung ($U_V$) des elektrischen Versorgungsnetzes (4) und der Gleichspannung ($U_{DC}$) des Gleichspannungskreises (2) ausgebildet ist.

9. Ladestromvorrichtung (13) zur Begrenzung (8) eines Ladestroms ($I_L$), aufweisend

    - einen Gleichspannungskreis (2),
    - Dioden (3), welche mit einem elektrischen Versorgungsnetz (4) verbindbar und mit dem Gleichspannungskreis (2) verbunden sind, wobei der Ladestrom ($I_L$) über die Dioden (3) von dem elektrischen Versorgungsnetz (4) in den Gleichspannungskreis (2) leitbar ist, und
    - eine Prozessoreinheit (14),

eingerichtet

    - zur Ermittlung (5) einer von einer Versorgungsspannung ($U_V$) des elektrischen Versorgungsnetzes (4) abhängigen Gleichspannung ($U_{DC}$) am Gleichspannungskreis (2),
    - zur Bestimmung (6) einer variablen Unterspannungsschwelle (7) am Gleichspannungskreis (2) und
    - zur Aktivierung der Begrenzung (8) des Ladestroms ($I_L$), wenn die Gleichspannung ($U_{DC}$) die variable Unterspannungsschwelle (7) erreicht oder unterschreitet.

10. Ladestromvorrichtung (13) nach Anspruch 9, wobei die Prozessoreinheit (14) zur Bildung (9) einer Spannungsdifferenz ($\Delta U$) zwischen der Gleichspannung ($U_{DC}$) und der variablen Unterspannungsabschaltschwelle (7) eingerichtet ist und wobei die Spannungsdifferenz ($\Delta U$), unabhängig vom Wert der Gleichspannung ($U_{DC}$), unveränderbar bleibt oder wobei die Spannungsdifferenz ($\Delta U$), abhängig vom Wert der Gleichspannung ($U_{DC}$), veränderbar ist.

11. Ladestromvorrichtung (13) nach einem der Ansprüche 9 oder 10, wobei zur Begrenzung (8) des Ladestroms ($I_L$) eine elektrische Vorladung (10) des Gleichspannungskreises (2) mittels einer Vorladeeinheit (15) und/oder eine Energieentnahmereduktion (11) am Gleichspannungskreis (2) mittels einer Abschalteinheit (16) aktivierbar ist.

12. Ladestromvorrichtung (13) nach einem der Ansprüche 9 bis 11, wobei die Prozessoreinheit (14) eingerichtet ist, die Bestimmung (6) der variablen Unterspannungsschwelle (7) in Abhängigkeit einer Kapazität ($C_{GK}$) am Gleichspannungskreis (2) und/oder in Abhängigkeit einer Netzimpedanz ($Z_N$) am elektrischen Versorgungsnetz (4) durchzuführen.

13. Ladestromvorrichtung (13) nach einem der Ansprüche 9 bis 12, wobei die Prozessoreinheit (14) eingerichtet ist, die Bestimmung (6) der variablen Unterspannungsschwelle (7) durchzuführen, wenn mittels einer Anstiegskontrollfunktion (12) ermittelbar ist, dass die Gleichspannung ($U_{DC}$) über einen bestimmten Zeitbereich ($t_B$) ansteigt.

14. Ladestromvorrichtung (13) nach einem der Ansprüche 9 bis 13, wobei die Prozessoreinheit (14) eingerichtet ist, zur Bestimmung (6) der variablen Unterspannungsabschaltschwelle (7) einen Modulationsindex (M) einer Reglung für schaltbare Leistungshalbleiter einer Brückenschaltung vorzusehen, wobei die Dioden (3) jeweils als Rückwärtsdioden parallel mit den schaltbare Leistungshalbleitern verschaltet sind und wobei der Modulationsindex (M) als Quotient aus der Versorgungsspannung ($U_V$) des elektrischen Versorgungsnetzes (4) und der Gleichspannung ($U_{DC}$) des Gleichspannungskreises (2) ausgebildet ist.

15. Elektrischer Umrichter (17) mit einer Ladestromvorrichtung (13) nach einem der Ansprüche 9 bis 14, wobei eine elektrische Maschine (18) mit dem Gleichspannungskreis (2) elektrisch verbindbar und über die Dioden (3) und den Gleichspannungskreis (2) am elektrischen Versorgungsnetz (4) betreibbar ist.

# FIG 1

1

$U_V, U_{DC}$ —5

9

6

$\Delta U, U_{DC}$

$\underline{7}$

$C_{GK}$

$\underline{7}$

$Z_N$

$\underline{7}$

$t_B, U_{DC}$

$\underline{7}$

$M, U_V, U_{DC}$

$\underline{7}$

8

10— $I_L$

$I_L$ —11

# FIG 2

# FIG 3

# FIG 4

# FIG 5

Europäisches
Patentamt

European
Patent Office

Office européen
des brevets

# EUROPÄISCHER RECHERCHENBERICHT

**Nummer der Anmeldung**

EP 21 17 9053

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>Y | DE 10 2010 025647 A1 (BOSCH GMBH ROBERT [DE]) 15. Dezember 2011 (2011-12-15)<br>* Absätze [0040], [0045], [0049]; Abbildungen 1-5 *<br>----- | 1,4,9,<br>11,15<br>2,3,5-8,<br>10,12-14 | INV.<br>H02M1/36<br>H02M5/45<br>H02M1/00 |
| X | DE 10 2008 014645 A1 (SIEMENS AG [DE]) 13. August 2009 (2009-08-13)<br>* Absatz [0015]; Abbildung 1 *<br>----- | 1,9,15 | |
| X | DE 10 2008 036485 A1 (SIEMENS AG [DE]) 18. Februar 2010 (2010-02-18)<br>* Absatz [0041]; Abbildung 1 *<br>----- | 1,9,15 | |
| X | DE 10 2016 007785 A1 (FANUC CORP [JP]) 5. Januar 2017 (2017-01-05)<br>* Absatz [0060]; Abbildungen 1-5 *<br>----- | 1,9,15 | |
| Y | DE 11 2014 004002 T5 (MITSUBISHI ELECTRIC CORP [JP]) 25. Mai 2016 (2016-05-25)<br>* Absatz [0059]; Abbildungen 1-7 *<br>----- | 2,3,10 | |
| Y | EP 2 642 652 A1 (SIEMENS AG [DE]) 25. September 2013 (2013-09-25)<br>* Absätze [0014], [0027], [0029], [0032] - [0034]; Abbildung 2 *<br>----- | 5,6,8,<br>12,14 | RECHERCHIERTE SACHGEBIETE (IPC)<br><br>H02M |
| Y | EP 3 379 675 A1 (SIEMENS AG [DE]) 26. September 2018 (2018-09-26)<br>* Absatz [0050]; Abbildung 2 *<br>----- | 7,13 | |

Der vorliegende Recherchenbericht wurde für alle Patentansprüche erstellt

| Recherchenort | Abschlußdatum der Recherche | Prüfer |
|---|---|---|
| Den Haag | 29. Oktober 2021 | Kanelis, Konstantin |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

............................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 17 9053

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-10-2021

| Im Recherchenbericht angeführtes Patentdokument | Datum der Veröffentlichung | Mitglied(er) der Patentfamilie | Datum der Veröffentlichung |
|---|---|---|---|
| DE 102010025647 A1 | 15-12-2011 | KEINE | |
| DE 102008014645 A1 | 13-08-2009 | KEINE | |
| DE 102008036485 A1 | 18-02-2010 | KEINE | |
| DE 102016007785 A1 | 05-01-2017 | CN 106330056 A<br>DE 102016007785 A1<br>JP 6219888 B2<br>JP 2017017931 A<br>US 2017005606 A1 | 11-01-2017<br>05-01-2017<br>25-10-2017<br>19-01-2017<br>05-01-2017 |
| DE 112014004002 T5 | 25-05-2016 | CN 105409107 A<br>DE 112014004002 T5<br>JP 6058147 B2<br>JP WO2015029597 A1<br>US 2016204691 A1<br>WO 2015029597 A1 | 16-03-2016<br>25-05-2016<br>11-01-2017<br>02-03-2017<br>14-07-2016<br>05-03-2015 |
| EP 2642652 A1 | 25-09-2013 | KEINE | |
| EP 3379675 A1 | 26-09-2018 | CN 110495064 A<br>EP 3379675 A1<br>EP 3583674 A1<br>US 2020099249 A1<br>WO 2018172309 A1 | 22-11-2019<br>26-09-2018<br>25-12-2019<br>26-03-2020<br>27-09-2018 |

Für nähere Einzelheiten zu diesem Anhang : siehe Amtsblatt des Europäischen Patentamts, Nr.12/82